# FASCICULE DE BREVET EUROPEEN

(11) **EP 2 580 880 B1**
(45) Date de publication et mention de la délivrance du brevet: **19.04.2017**
(21) Numéro de dépôt: 11712943.7
(22) Date de dépôt: 01.03.2011
(51) Int. Cl.: H04B 10/118

(54) **PROCEDE ET SYSTEME DE TRANSMISSION OPTIQUE PAR SIGNAUX LASER EN CHAMP LIBRE**
VERFAHREN UND SYSTEM FÜR OPTISCHE FREIFELDÜBERTRAGUNG ÜBER LASERSIGNALE
METHOD AND SYSTEM FOR FREE-FIELD OPTICAL TRANSMISSION BY MEANS OF LASER SIGNALS

(30) Priorité: 08.03.2010 FR 1051649
(43) Date de publication de la demande: 17.04.2013
(73) Titulaire: Airbus Defence and Space SAS, 78130 Les Mureaux (FR)
(72) Inventeur: CHORVALLI, Vincent, F-31130 Quint Fonsegrives (FR)
(74) Mandataire: Cabinet Plasseraud
(86) Numéro de dépôt international: PCT/FR2011/050422
(87) Numéro de publication internationale: WO 2011/110771

(56) Documents cités:
- EP-A1- 1 592 153
- US-A1- 2003 005 385
- US-A1- 2005 100 339
- ZHANG W ET AL: "Short-Length Raptor Codes for Mobile Free-Space Optical Channels", COMMUNICATIONS, 2009. ICC '09. IEEE INTERNATIONAL CONFERENCE ON, IEEE, PISCATAWAY, NJ, USA, 14 juin 2009 (2009-06-14), pages 1-5, XP031506431, ISBN: 978-1-4244-3435-0
- KAMAL HARB, CHANGCHENG HUANG, ANAND SRINIVASAN, BRIAN CHENG: "Intelligent Weather Aware Scheme for Satellite Systems", ICC 2008 PROCEEDINGS, 2008, pages 1930-1936, XP002613006, ICC 2008

## Description

La présente invention concerne un procédé de transmission optique par signaux laser, ainsi qu'un terminal de communication optique qui est adapté pour mettre en oeuvre un tel procédé.

Le mode de communication par transmission de signaux laser en champ libre, qui est désigné par «free-space laser communication» en anglais, est bien connu. Il consiste à moduler un faisceau laser qui est transmis par un terminal émetteur en direction d'un terminal récepteur, en fonction une information utile («payload information» en anglais) à transmettre. A cause de l'ouverture angulaire du faisceau laser qui est très faible, il est nécessaire de maintenir un pointage précis du terminal émetteur en direction du terminal récepteur pendant une session de communication. Ce maintien de la direction de pointage est désigné par phase de poursuite de la session de communication. En réalité, les deux terminaux doivent être précisément et simultanément pointés chacun en direction de l'autre, notamment parce que chacun d'eux transmet régulièrement des signaux de balise qui sont nécessaires pour maintenir l'alignement entre les directions de pointage, même si l'un des deux terminaux ne transmet pas d'information utile momentanément.

Lorsqu'un faisceau laser de communication traverse une partie au moins de l'atmosphère terrestre, cette dernière peut perturber la propagation du faisceau laser entre les deux terminaux, et par suite provoquer des défauts de transmission de l'information utile. Des conditions atmosphériques difficiles peuvent même provoquer une perte de la liaison optique entre les deux terminaux. Le document US 6,970,651 décrit une méthode pour éviter de perdre la liaison optique, qui est basée sur l'utilisation d'un capteur spécifique pour détecter une caractéristique atmosphérique, indicative de certaines des perturbations atmosphériques qui pourraient affecter la propagation des signaux laser.

Par ailleurs, le document US 2006/0024061 divulgue de corriger le front d'onde des signaux laser qui sont reçus par l'un des terminaux de communication optique, pour réduire les perturbations causées par des turbulences atmosphériques. Il est notamment connu que lorsque la communication optique est établie avec l'un des terminaux qui est situé dans l'atmosphère terrestre et l'autre terminal qui est situé dans l'espace, par exemple à bord d'un satellite, la transmission optique dans le sens de la Terre vers l'espace est plus perturbée que la transmission optique dans le sens opposé. Le document US2003/0005385 décrit un système et une méthode pour varier l'encodage des données en fonction du taux d'erreur des donnés reçues par le terminal opposé, lui-même fonction de la puissance du signal reçu.

De façon générale, un but de la présente invention est d'améliorer la qualité d'une communication entre deux terminaux optiques à transmission de faisceaux laser.

Plus particulièrement, l'invention vise à réduire un taux d'erreur qui affecte une information utile lorsque cette information est transmise par la communication optique, sans toutefois réduire inutilement le débit de transmission de cette information utile.

Pour cela, l'invention propose un procédé de transmission optique par signaux laser en champ libre, entre un premier et un second terminal de communication optique, suivant lequel des variations temporelles sont évaluées pour une caractéristique de réception de premiers signaux laser qui sont reçus par le premier terminal, en provenance du second terminal. Une information utile qui est destinée à être transmise par le premier terminal à destination du second terminal est codée avant transmission. Un taux de codage de cette information utile dans des seconds signaux laser qui sont émis par le premier terminal en direction du second terminal, est variable et ajusté en fonction des variations temporelles de la caractéristique de réception des premiers signaux laser. Ce taux de codage est ajusté selon une fonction décroissante d'une amplitude des variations temporelles de la caractéristique de réception des premiers signaux laser, y compris selon une fonction décroissante par paliers.

Dans le cadre de la présente invention, on entend par fonction décroissante d'une amplitude, y compris une fonction décroissante par paliers, une fonction dont les valeurs de sortie diminuent ou restent constantes lorsque l'amplitude considérée, utilisée comme entrée pour la fonction, augmente. Conformément à l'usage général, l'amplitude de variations d'une caractéristique est un nombre positif qui mesure une importance de ces variations, ce nombre d'amplitude étant d'autant plus élevé que les variations sont importantes en valeurs absolues.

Le taux de codage de l'information utile dans les seconds signaux laser est défini comme un quotient d'un nombre de bits de cette information utile avant codage, par un nombre de bits correspondant à la même information utile après codage.

Ainsi, l'influence sur la liaison optique d'un milieu intermédiaire entre les deux terminaux est évaluée selon l'invention à partir des signaux qui sont reçus par l'un des deux terminaux, à savoir les signaux laser qui sont reçus par le premier terminal et qui sont appelés premiers signaux laser. Cette information sur l'influence du milieu intermédiaire est ensuite utilisée pour adapter le taux de codage du canal de transmission par signaux laser, pour l'information utile qui est transmise par le premier terminal. Le taux de codage qui est utilisé est réduit lorsqu'une influence perturbatrice du milieu intermédiaire sur la liaison optique est détectée, qui est supérieure.

De cette façon, la qualité de la transmission de l'information utile du premier terminal au second terminal est améliorée pendant la phase de poursuite de la session de communication. L'invention fournit en particulier un compromis qui est amélioré, entre l'obtention d'une qualité de communication qui soit suffisante et un débit effectif qui soit important pour transmettre l'information utile.

Selon l'invention, la caractéristique de réception des premiers signaux laser dont les variations temporelles sont utilisées pour ajuster le taux de codage est une direction de réception des premiers signaux laser, ou un écart entre cette direction de réception des premiers signaux laser et un axe optique du premier terminal. De telles caractéristiques de réception peuvent être mesurées facilement, de même que leurs variations temporelles. En outre, elles révèlent efficacement la présence de turbulences atmosphériques sur le trajet des signaux laser de la liaison optique entre les deux terminaux, de telles turbulences pouvant provoquer des taux d'erreur élevés dans l'information utile qui est reçue par le second terminal.

L'invention est particulièrement utile lorsque le premier terminal est situé sur Terre ou embarqué à bord d'un aéronef qui est situé dans l'atmosphère terrestre, et que le second terminal est embarqué à bord d'un engin spatial.

Plusieurs avantages de la présente invention résultent de l'utilisation des signaux laser de communication qui sont reçus par l'un des terminaux pour évaluer l'influence de l'atmosphère terrestre sur la liaison optique. D'une part, il n'est pas nécessaire d'utiliser un capteur spécifique pour caractériser les conditions atmosphériques. D'autre part, la caractérisation des conditions atmosphériques qui est obtenue concerne la portion d'atmosphère qui est réellement traversée par les signaux laser, sur tout le trajet de ces signaux à travers l'atmosphère. Ainsi, des perturbations locales et peu étendues qui sont présentes sur le trajet des signaux laser sont prises en compte, alors qu'elles ne seraient pas détectées par un capteur éloigné ni par des capteurs qui seraient situés à proximité des terminaux. Enfin, cette information sur les conditions atmosphériques concerne l'état atmosphérique réel, et ne résulte pas de prévisions météorologiques. En effet, de telles prévisions météorologiques sont en général incertaines. De plus, leur précision quant à la localisation géographique des phénomènes prévus est insuffisante. En outre, étant donné que l'échelle de temps des variations atmosphériques qui perturbent une transmission optique est de l'ordre de la seconde, ces variations atmosphériques ne sont pas prévisibles par les méthodes connues de prévisions météorologiques.

Dans des mises en oeuvre préférées de l'invention, l'amplitude des variations temporelles de la caractéristique de réception des premiers signaux laser peut être évaluée en calculant un écart-type de cette caractéristique.

Préférablement, la caractéristique de réception des premiers signaux laser qui sont reçus par le premier terminal est mesurée à une fréquence de mesure qui peut être supérieure à 100 Hz, et l'amplitude de ses variations temporelles est évaluée à une fréquence d'analyse qui peut être inférieure à 10 Hz.

De préférence encore, l'amplitude des variations temporelles de la caractéristique de réception des premiers signaux laser peut être évaluée d'une façon répétée pendant une session de communication. Le taux de codage de l'information utile dans les seconds signaux laser peut alors être ajusté en temps réel pendant la même session de communication.

L'invention propose aussi un terminal de communication par transmission de signaux laser en champ libre, qui comprend :
- un récepteur de premiers signaux laser en provenance d'un terminal externe ;
- un émetteur de seconds signaux laser, pour transmettre une information utile au terminal externe ;
- un module d'analyse de variations temporelles d'une caractéristique de réception des premiers signaux laser ;
- un module de codage de l'information utile, qui est adapté pour construire les seconds signaux laser à partir de cette information utile avec un taux de codage variable ; et
- un module de sélection du taux de codage de l'information utile dans les seconds signaux laser, qui est adapté pour ajuster ce taux de codage selon une fonction décroissante d'une amplitude des variations temporelles de la caractéristique de réception des premiers signaux laser, y compris selon une fonction décroissante par paliers.

Selon l'invention, la caractéristique de réception des premiers signaux laser est sélectionnée parmi une direction de réception de ces premiers signaux laser ou un écart entre cette direction de réception et un axe optique du terminal récepteur des premiers signaux.

Avantageusement, le module d'analyse des variations temporelles de la caractéristique de réception des premiers signaux laser peut être adapté en outre pour produire des évaluations d'une valeur moyenne de la puissance de réception de ces premiers signaux laser. Dans ce cas, le module de sélection du taux de codage de l'information utile dans les seconds signaux laser peut être adapté en outre pour ajuster ce taux de codage en fonction de la valeur moyenne de la puissance de réception des premiers signaux laser, de sorte que ce taux de codage soit supérieur ou identique lorsque la valeur moyenne de la puissance de réception des premiers signaux laser est elle-même supérieure, à amplitude identique des variations temporelles de la caractéristique de réception des premiers signaux laser.

Un tel terminal de communication est adapté pour mettre en oeuvre un procédé de transmission optique conforme à l'invention, tel que décrit précédemment et éventuellement avec les perfectionnements qui ont été indiqués.

Il peut être adapté en outre pour émettre les seconds signaux laser à destination du terminal externe avec un débit de canal qui est supérieur ou égal à 10 Mbps (mégabit par seconde), le débit de canal étant égal à un débit de transmission de l'information utile divisé par le taux de codage.

D'autres particularités et avantages de la présente invention apparaîtront dans la description ci-après d'exemples de mises en oeuvre non limitatifs, en référence aux dessins annexés, dans lesquels :
- la figure 1 représente schématiquement un système de communication optique par transmission de signaux laser, dans lequel l'invention peut être mise en oeuvre ;
- la figure 2 illustre fonctionnellement une mise en oeuvre de l'invention pour le système de communication optique de la figure 1 ;
- la figure 3a représente une séquence de transmission avec plusieurs valeurs de taux de codage qui sont utilisées successivement ; et
- les figures 3b et 3c sont des diagrammes indiquant des variations de taux d'erreur de bit de signaux reçus, respectivement avant et après décodage pour la séquence de transmission de la figure 3a.

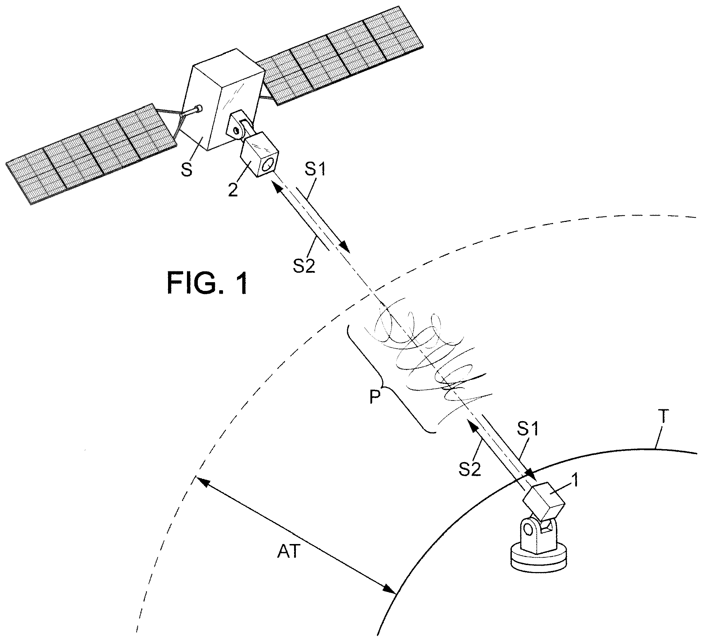

Conformément à la figure 1a, un système de communication optique par transmission de signaux laser en champ libre comprend un premier terminal 1 qui est situé sur Terre et un second terminal 2 qui est situé à bord d'un satellite. Les deux terminaux 1 et 2 peuvent être conformes aux modèles connus avant l'invention, si bien qu'il n'est pas nécessaire de répéter ici leur structure ni leur fonctionnement. Chacun des deux terminaux 1 et 2 produit des signaux laser en direction de l'autre terminal et reçoit simultanément des signaux en provenance de ce dernier. Les références T et S désignent respectivement la Terre et le satellite. Le satellite S peut être géostationnaire, et dédié à une fonction de relais de communication entre un autre satellite, par exemple un satellite d'observation, et le terminal 1 pour retransmettre vers la Terre des données d'imagerie qui sont produites par le satellite d'observation.

Les signaux laser qui sont échangés par les terminaux 1 et 2 traversent donc l'atmosphère terrestre, qui est notée AT. De façon connue, l'atmosphère AT peut perturber la propagation des signaux laser de diverses façons : notamment par diffusion et par déviation. La diffusion peut être provoquée par des nuages qui sont présents sur le trajet des signaux, et la déviation des signaux peut être provoquée par des variations locales de température ou de composition de l'atmosphère terrestre AT. Particulièrement, des turbulences atmosphériques notées P peuvent dévier les signaux laser par rapport à une propagation qui serait affectée par la diffraction uniquement. Les signaux laser sont alors décalés par rapport à leur direction d'émission initiale lorsqu'ils arrivent au niveau du terminal auquel ils sont destinés, de sorte que leur détection de réception est perturbée. Des erreurs en résultent dans l'information qui a été transmise sous forme binaire puis reçue. La fréquence de ces erreurs est caractérisée par la valeur d'un taux d'erreur de bit, qui est le rapport du nombre de bits qui sont reçus et interprétés de façon erronée, par le nombre de bits qui sont transmis réellement.

Etant donné que l'atmosphère AT est plus proche du terminal terrestre 1 que du terminal 2 qui est embarqué à bord du satellite S, les turbulences atmosphériques affectent plus les signaux laser qui sont transmis par le terminal 1 au terminal 2, que les signaux laser qui sont transmis par le terminal 2 au terminal 1. Pour cette raison, l'invention est mise en oeuvre d'une façon plus avantageuse au sein du terminal 1, mais elle peut aussi être appliquée au terminal 2, d'une façon identique. Dans la présente description de l'invention, les signaux laser qui sont reçus par le terminal 1, en provenance du terminal 2, sont appelés premiers signaux laser et notés S1, et les signaux laser qui sont transmis par le terminal 1 au terminal 2 sont appelés seconds signaux laser et notés S2.

De façon connue, une liaison de communication par transmission de signaux laser, appelée couramment liaison par canal laser, possède un débit nominal de transmission qui est une caractéristique du canal laser. Ce débit de transmission, ou débit de canal, dépend des terminaux 1 et 2 qui sont utilisés, ainsi que des systèmes de traitement de l'information transmise, à l'émission et à la réception de cette information. Par exemple, le débit de canal du terminal 1 vers le terminal 2 peut être de 50 Mbps (mégabit par seconde), voire de plusieurs centaines de mégabits par seconde.

D'une façon qui est aussi connue, une information utile sous forme binaire est codée pour être transmise entre les deux terminaux avec une qualité de transmission qui soit suffisante, c'est-à-dire avec un taux d'erreur de bit qui soit suffisamment faible. Un tel codage, qui est couramment appelé codage de canal, consiste notamment à ajouter de la redondance dans les signaux laser qui sont transmis, par rapport à l'information utile. Cette redondance comprend notamment l'ajout de bits de parité pour détecter d'éventuelles erreurs dans le signal utile qui est reçu après transmission. L'utilisation du débit de canal est ainsi partagée entre un débit utile qui correspond au volume binaire de l'information utile qui est transmise, et un débit de codage qui correspond aux bits rajoutés par le codage. Le débit de codage ne correspond donc pas à de l'information supplémentaire qui serait transmise en sus de l'information utile, mais à une redondance dans le flux binaire qui est transmis, de sorte que le débit de codage apparaît comme une limitation pour le débit utile par rapport au débit de canal.

Le taux de codage est le nombre de bits qui sont nécessaires pour transcrire l'information utile sous forme binaire, en rapport au nombre total de bits qui sont transmis après codage pour la même information utile. Par exemple, un taux de codage de 4 :9 signifie que 9 bits sont transmis par le canal laser pour une information utile de 4 bits seulement. Autrement dit, le codage des 4 bits d'information utile a ajouté 5 bits supplémentaires de redondance. Des codages différents sont disponibles qui correspondent à des taux de codage variables. Plus le taux de codage tel qu'il vient d'être défini présente une valeur élevée, plus la redondance qui est introduite par le codage est faible. Or une redondance importante réduit le taux d'erreur de bit de l'information utile qui est transmise, après décodage de cette information au niveau du terminal récepteur pour des conditions de transmission identique du canal laser.

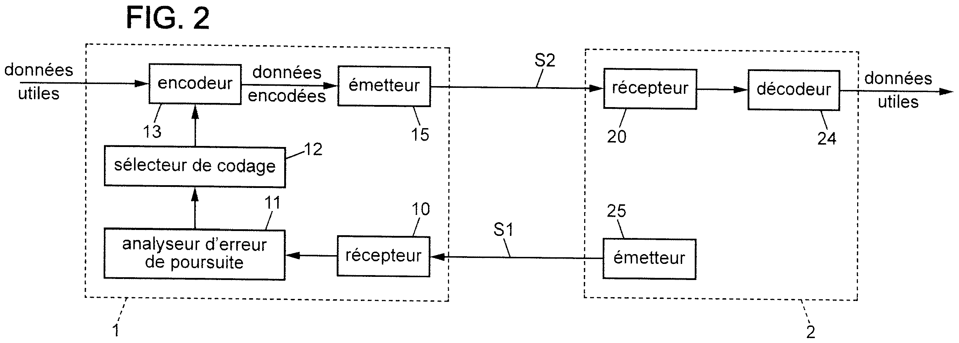

La figure 2 illustre fonctionnellement une mise en oeuvre de l'invention au sein du terminal 1. Les éléments du fonctionnement d'un terminal de communication par transmission de signaux laser qui ne sont pas modifiés ou concernés par l'invention ne sont pas repris, étant entendu qu'ils sont utilisés de la façon connue de l'Homme du métier.

Les signaux laser S1 sont produits par un émetteur 25 du terminal 2.

Au sein du terminal 1, un récepteur 10 des signaux laser S1 mesure, en même temps qu'il détecte les signaux S1, une caractéristique de réception de ceux-ci. Cette caractéristique de réception des signaux S1 peut être notamment une direction de réception de ces signaux, ou un écart entre une direction de réception de ceux-ci et un axe optique du terminal 1. Cet écart est appelé erreur de poursuite dans le jargon de l'Homme du métier. Eventuellement, la caractéristique de réception qui est mesurée peut aussi être une combinaison d'une puissance de réception des signaux laser S1 et de l'erreur de poursuite. En outre, la puissance de réception des signaux S1 peut être mesurée par un détecteur qui est utilisé pour la communication, ou par un détecteur qui est utilisé pour le contrôle du pointage, appelé usuellement capteur de poursuite. Un module d'analyse 11 évalue une amplitude des variations temporelles de la caractéristique de réception des signaux S1, par exemple en calculant un écart-type de ses variations. Dans le cadre de l'invention, ces variations temporelles de la caractéristique de réception des signaux S1 sont utilisées pour révéler l'existence de conditions atmosphériques qui perturbent la propagation des signaux laser S1. Par exemple, la caractéristique de réception des signaux S1 peut être mesurée par le module 11 à une fréquence de 500 Hz (hertz) ou 1 kHz (kilohertz), et l'amplitude des variations temporelles de cette caractéristique de réception peut être évaluée par le module 11 à une fréquence de 1 Hz ou 2 Hz.

Un module 12 sélectionne le taux de codage à utiliser, et éventuellement aussi le type du codage lui-même, en fonction du résultat de l'évaluation des variations de la caractéristique de réception qui est fournie par le module 11. Ainsi, le taux de codage qui est utilisé peut être modifié à chaque nouvelle évaluation des variations de la caractéristique de réception des signaux S1. Autrement dit, le taux de codage peut être actualisé en appliquant l'invention à la même fréquence que l'évaluation des variations temporelles de la caractéristique de réception. Une telle fréquence d'adaptation du taux de codage est compatible avec la stationnarité de turbulences atmosphériques P qui sont présentes sur le trajet des signaux laser S1 et S2.

L'encodeur 13 reçoit d'une part une consigne du module 12, qui indique le taux de codage à utiliser, et d'autre part le flux binaire des données utiles qui constitue l'information utile à transmettre. L'encodeur 13 encode les données utiles puis les transmet à l'émetteur 15 qui produit les signaux laser S2 conformément aux données encodées.

Les signaux laser S2 sont ensuite détectés par un récepteur 20 du terminal 2, puis décodées par un décodeur 24 pour restituer les données utiles à bord du satellite S. La valeur qui est utilisée pour le taux de codage des données utiles est contenue dans les signaux laser S2, de sorte que le décodeur 24 lit cette valeur du taux de codage dans les signaux qu'il reçoit, pour décoder les données utiles qui sont contenues dans ces mêmes signaux.

Par exemple, le codage utilisé peut être du type DVB-S2, pour lequel plus de dix valeurs différentes du taux de codage sont disponibles, comprises entre 1 :5 et 9 :10.

Le tableau 1 ci-dessous est un exemple de corrélation selon l'invention, entre l'amplitude des variations temporelles de la caractéristique de réception des signaux laser S1 et la valeur du taux de codage à utiliser. La caractéristique de réception considérée est l'erreur de poursuite du terminal 1, et ses variations temporelles sont évaluées par l'écart-type de ses valeurs instantanées, calculé sur des durées successives de une à plusieurs secondes. Cet écart-type est noté σₚₒᵤᵣₛᵤᵢₜₑ et est exprimé en microradians (µrad). La valeur du taux de codage varie conformément à des fonctions décroissantes par paliers de σₚₒᵤᵣₛᵤᵢₜₑ, définies pour deux intervalles séparés de la puissance moyenne des signaux S1 à leur réception par le terminal 1. Cette puissance moyenne des signaux S1 est notée P, et ses valeurs numériques sont exprimées en picowatts (pW). Elles peuvent être calculées par le module 11 à la même fréquence et en même temps que l'écart-type de l'erreur de poursuite.

**Tableau 1**

| Puissance moyenne (pW) | Ecart-type de l'erreur de poursuite (µrad) | Taux de codage |
|---|---|---|
| P > 200 | (σₚₒᵤᵣₛᵤᵢₜₑ < 0,3 | 11 :15 |
| P > 200 | 0,3 < σₚₒᵤᵣₛᵤᵢₜₑ < 0,5 | 2 :3 |
| P > 200 | 0,5 < σₚₒᵤᵣₛᵤᵢₜₑ < 0,7 | 4 :9 |
| P > 200 | 0,7 < σₚₒᵤᵣₛᵤᵢₜₑ | 2 :5 |
| 100 < P < 200 | σₚₒᵤᵣₛᵤᵢₜₑ < 0,3 | 4 :9 |
| 100 < P < 200 | 0,3 < σₚₒᵤᵣₛᵤᵢₜₑ < 0,5 | 2 :5 |
| 100 < P < 200 | 0,5 < σₚₒᵤᵣₛᵤᵢₜₑ < 0,7 | 1 :3 |
| 100 < P < 200 | 0,7 < σₚₒᵤᵣₛᵤᵢₜₑ | 1 :5 |

Dans des mises en oeuvre préférées de l'invention, le module 12 de sélection du taux de codage peut être adapté en outre pour sélectionner une valeur initiale du taux de codage qui est faible et qui correspond à une redondance importante de l'information utile, à utiliser au début d'une nouvelle session de communication. Une telle valeur faible du taux de codage assure initialement une bonne qualité de la transmission de l'information utile, quelque soit les conditions atmosphériques sur le trajet des signaux laser S2. Le module 12 ajuste ensuite, ultérieurement pendant la même session de communication, le taux de codage comme il a été décrit précédemment, à des valeurs qui sont supérieures à la valeur initiale et correspondent à une redondance ultérieure qui est inférieure à la redondance initiale. De cette façon, le compromis optimisé selon l'invention entre la qualité de transmission et le débit utile qui est disponible est réalisé pendant presque toute la durée de la session de communication, sans que des données utiles risquent d'être transmises avec des erreurs au début de la session. On comprend ainsi que les expressions utilisées «valeur faible» et «valeurs supérieures» du taux de codage ont un sens comparatif, l'une par rapport à l'autre, entre la valeur initiale et des valeurs ultérieures du taux de codage. Autrement dit, les valeurs ultérieures du taux de codage sont supérieures à la valeur initiale.

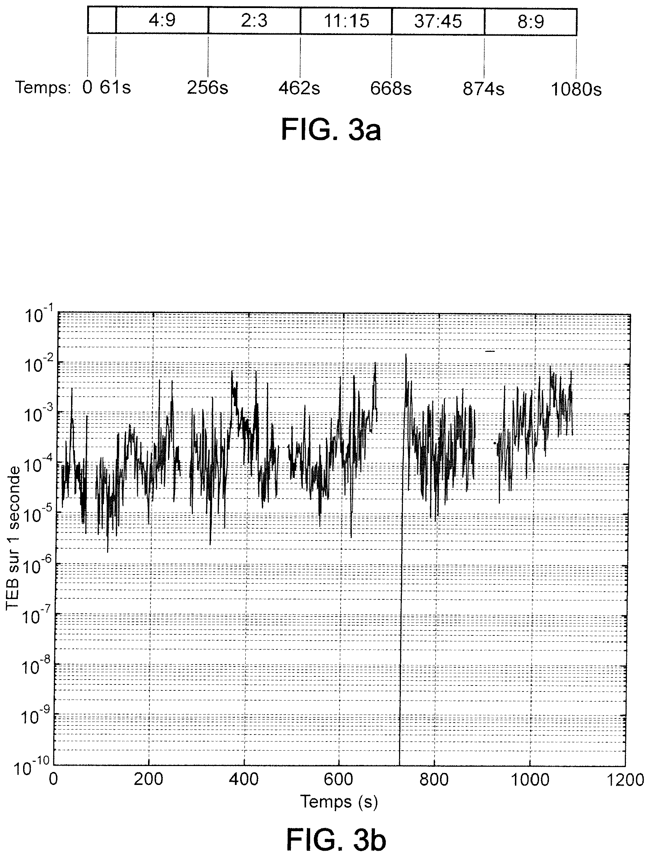

A titre d'illustration de l'efficacité de l'invention, la séquence de variation du taux de codage de la figure 3a a été réalisée lors d'une transmission continue entre les terminaux 1 et 2. La durée totale de la séquence est 18 minutes, soit 1080 secondes, pendant laquelle cinq valeurs différentes ont été successivement adoptées pour le taux de codage. Ces valeurs de taux de codage croissent en fonction du temps, de 4 :9 à 8 :9, correspondant à une réduction de la redondance dans les signaux laser S2. Pendant cette durée de transmission, la puissance de réception des signaux laser S1 a été mesurée sur le détecteur de poursuite à une fréquence de 10 kHz, et des valeurs moyennes de cette puissance de réception ont été calculées pour des périodes successives de 1 seconde. Ces valeurs moyennes de la puissance de réception des signaux S1 sont sensiblement constantes, environ égales à 60 pW. Cette stabilité indique que les conditions de transmission sont bonnes et constantes, et en particulier qu'aucun nuage ne traverse le trajet des signaux S1. L'erreur de poursuite a aussi été mesurée à la fréquence de 10 kHz et les valeurs de son écart-type ont été calculées toutes les secondes. Elles confirment la stabilité des conditions atmosphériques et l'absence de turbulences.

Le diagramme de la figure 3b montre l'évolution du taux d'erreur de bit dans les signaux S2 pendant la séquence de la figure 3a, à la réception de ces signaux S2 par le terminal 2 et avant décodage. Les valeurs de ce taux d'erreur de bit avant décodage sont principalement comprises entre 10⁻³ et 10⁻⁵.

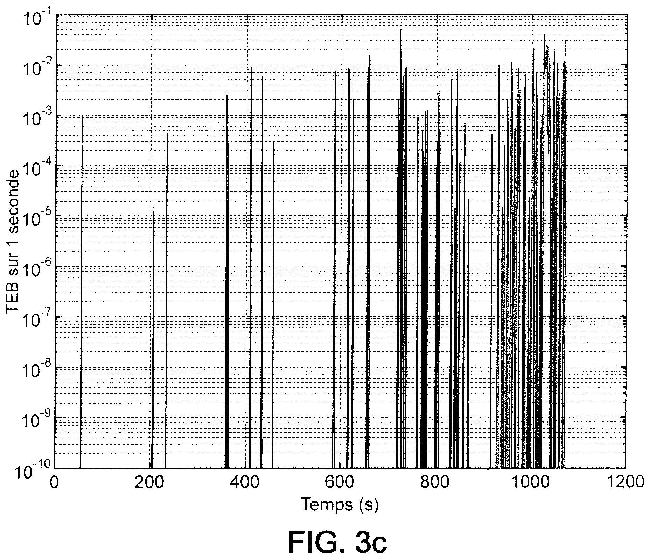

La figure 3c correspond à la figure 3b, pour le taux d'erreur de bit dans les signaux S2 après décodage de ceux-ci par le décodeur 24. Les valeurs du taux d'erreur de bit après décodage sont inférieures à 10⁻¹⁰ pour les taux de codage 4 :9, 2 :3 et 11 :15, en dehors de quelques points isolés. Par contre, le taux d'erreur de bit après décodage présente de nombreuses valeurs supérieures à 10⁻⁵ pour les taux de codage 37:45 et 8 :9. Tant que les conditions atmosphériques restent stables, le taux de codage optimal est donc 11 :15. Conformément à l'invention, le taux de codage sera diminué par rapport à cette valeur si les variations de la puissance de réception des signaux S1 et/ou l'écart-type de l'erreur de poursuite augmente(nt), ou sera augmenté dans le cas contraire.

Bien que la mise en oeuvre de l'invention qui a été décrite en détail ci-dessus concerne un terminal de communication optique qui est situé au sol, c'est-à-dire au niveau de la surface de la Terre, il est entendu que l'invention peut être appliquée de façon identique à un terminal de communication optique qui est embarqué à bord d'un aéronef ou d'un avion en vol.

Enfin, l'invention est efficace pour réduire les perturbations de transmission qui sont causées aussi bien par des turbulences atmosphériques que par des nuages, notamment des cirrus, ou encore d'autres phénomènes atmosphériques qui seraient présents sur le trajet des signaux laser.

## Revendications

1. Procédé de transmission optique par signaux laser en champ libre, entre un premier (1) et un second (2) terminal de communication optique, suivant lequel des variations temporelles sont évaluées pour une caractéristique de réception de premiers signaux laser (S1) reçus par le premier terminal, en provenance du second terminal, et suivant lequel une information utile à transmettre par le premier terminal à destination du second terminal est codée avant transmission,
un taux de codage de l'information utile dans des seconds signaux laser (S2) émis par ledit premier terminal (1) en direction dudit second terminal (2), étant variable et ajusté en fonction des variations temporelles de la caractéristique de réception des premiers signaux laser (S1),
ledit taux de codage de l'information utile dans les seconds signaux laser étant défini comme un quotient d'un nombre de bits de l'information utile avant codage, par un nombre de bits correspondant à la même information utile après codage,
ledit taux de codage de l'information utile dans les seconds signaux laser (S2) étant ajusté selon une fonction décroissante d'une amplitude des variations temporelles de la caractéristique de réception des premiers signaux laser (S1), y compris une fonction décroissante par paliers,
le procédé étant **caractérisé en ce que** la caractéristique de réception des premiers signaux laser (S1) est sélectionnée parmi une direction de réception des dits premiers signaux laser ou un écart entre une direction de réception des dits premiers signaux et un axe optique du premier terminal (1).

2. Procédé selon la revendication 1, suivant lequel le premier terminal (1) est situé sur Terre (T) ou embarqué à bord d'un aéronef situé dans l'atmosphère terrestre (AT), et le second terminal (2) est embarqué à bord d'un engin spatial (S).

3. Procédé selon la revendication 1 ou 2, suivant lequel l'amplitude des variations temporelles de la caractéristique de réception des premiers signaux laser (S1) est évaluée en calculant un écart-type de ladite caractéristique de réception des premiers signaux laser.

4. Procédé selon l'une quelconque des revendications précédentes, suivant lequel la caractéristique de réception des premiers signaux laser (S1) reçus par le premier terminal (1) est mesurée à une fréquence de mesure supérieure à 100 Hz, et l'amplitude des variations temporelles de ladite caractéristique de réception des premiers signaux laser est évaluée à une fréquence d'analyse inférieure à 10 Hz.

5. Procédé selon l'une quelconque des revendications précédentes, suivant lequel l'amplitude des variations temporelles de la caractéristique de réception des premiers signaux laser (S1) est évaluée de façon répétée pendant une session de communication, et suivant lequel le taux de codage de l'information utile dans les seconds signaux laser (S2) est ajusté en temps réel pendant ladite session de communication.

6. Procédé selon l'une quelconque des revendications précédentes, suivant lequel le taux de codage de l'information utile dans les seconds signaux laser (S2) est ajusté en outre en fonction d'une valeur moyenne d'une puissance de réception des premiers signaux laser (S1), de sorte que ledit taux de codage soit supérieur ou identique lorsque ladite valeur moyenne de la puissance de réception des premiers signaux laser est elle-même supérieure, à amplitude identique des variations temporelles de la caractéristique de réception des premiers signaux laser.

7. Procédé selon l'une quelconque des revendications précédentes, suivant lequel une valeur initiale faible du taux de codage est utilisée en début de session de communication, correspondant à une redondance initiale importante de l'information utile, puis le taux de codage est ajusté ultérieurement pendant ladite session de communication à des valeurs supérieures à la valeur initiale, selon la fonction décroissante de l'amplitude des variations temporelles de la caractéristique de réception des premiers signaux laser, et correspondant à une redondance ultérieure qui est inférieure à ladite redondance initiale.

8. Procédé selon l'une quelconque des revendications précédentes, suivant lequel les seconds signaux laser (S2) émis par le premier terminal (1) à destination du second terminal (2), ont un débit de canal supérieur à 10 Mbps, égal à un débit de transmission de l'information utile divisé par le taux de codage.

9. Terminal de communication optique par transmission de signaux laser en champ libre (1), comprenant :
- un récepteur (10) de premiers signaux laser (S1) en provenance d'un terminal externe (2) ;
- un émetteur (15) de seconds signaux laser (S2), pour transmettre une information utile au terminal externe (2) ;
- un module (11) d'analyse de variations temporelles d'une caractéristique de réception des premiers signaux laser (S1) ;
- un module (13) de codage de l'information utile, adapté pour construire les seconds signaux laser (S2) à partir de ladite information utile avec un taux de codage variable ; et
- un module (12) de sélection du taux de codage de l'information utile dans les seconds signaux laser (S2), adapté pour ajuster ledit taux de codage selon une fonction décroissante d'une amplitude des variations temporelles de la caractéristique de réception des premiers signaux laser (S1), y compris une fonction décroissante par paliers,
le taux de codage de l'information utile dans les seconds signaux laser étant défini comme un quotient d'un nombre de bits de l'information utile avant codage, par un nombre de bits correspondant à la même information utile après codage,
le terminal (1) étant **caractérisé en ce que** la caractéristique de réception des premiers signaux laser (S1) est sélectionnée parmi une direction de réception des dits premiers signaux laser ou un écart entre une direction de réception des dits premiers signaux et un axe optique dudit terminal (1).

10. Terminal selon la revendication 9, dans lequel le module (11) d'analyse des variations temporelles de la caractéristique de réception des premiers signaux laser (S1) est adapté pour calculer un écart-type de ladite caractéristique de réception des premiers signaux laser.

11. Terminal selon la revendication 9 ou 10, dans lequel le module (11) d'analyse des variations temporelles de la caractéristique de réception des premiers signaux laser (S1) est adapté pour mesurer ladite caractéristique de réception à une fréquence de mesure supérieure à 100 Hz, et pour produire des évaluations de l'amplitude des variations temporelles de ladite caractéristique de réception à une fréquence d'analyse inférieure à 10 Hz.

12. Terminal selon l'une quelconque des revendications 9 à 11, dans lequel le module (11) d'analyse des variations temporelles de la caractéristique de réception des premiers signaux laser (S1) est adapté pour évaluer l'amplitude des dites variations de façon répétée pendant une session de communication, et le module (12) de sélection du taux de codage de l'information utile dans les seconds signaux laser (S2) est adapté pour ajuster ledit taux de codage en temps réel pendant ladite session de communication.

13. Terminal selon l'une quelconque des revendications 9 à 12, dans lequel le module (11) d'analyse des variations temporelles de la caractéristique de réception des premiers signaux laser (S1) est adapté en outre pour produire des évaluations d'une valeur moyenne d'une puissance de réception des dits premiers signaux laser, et le module (12) de sélection du taux de codage de l'information utile dans les seconds signaux laser (S2) est adapté en outre pour ajuster ledit taux de codage en fonction de la valeur moyenne de la puissance de réception des premiers signaux laser (S1), de sorte que ledit taux de codage soit supérieur ou identique lorsque ladite valeur moyenne de la puissance de réception des premiers signaux laser est elle-même supérieure, à amplitude identique des variations temporelles de la caractéristique de réception des premiers signaux laser.

14. Terminal selon l'une quelconque des revendications 9 à 13, dans lequel le module (12) de sélection du taux de codage est adapté en outre pour sélectionner une valeur initiale faible pour le taux de codage en début de session de communication, correspondant à une redondance initiale importante de l'information utile, et pour ajuster le taux de codage ultérieurement pendant ladite session de communication à des valeurs supérieures à la valeur initiale, selon la fonction décroissante de l'amplitude des variations temporelles de la caractéristique de réception des premiers signaux laser, et correspondant à une redondance ultérieure qui est inférieure à ladite redondance initiale.

15. Terminal selon l'une quelconque des revendications 9 à 14, adapté pour émettre les seconds signaux laser (S2) à destination du terminal externe (2) avec un débit de canal supérieur ou égal à 10 Mbps, égal à un débit de transmission de l'information utile divisé par le taux de codage.

## Patentansprüche

1. Verfahren für optische Freifeldübertragung über Lasersignale zwischen einem ersten (1) und einem zweiten (2) Endgerät zur optischen Kommunikation, bei dem zeitliche Veränderungen für eine Charakteristik des Empfangs von ersten Lasersignalen (S1), die durch das erste Endgerät von dem zweiten Endgerät empfangen werden, bewertet werden und bei dem eine Information, die nützlich für das Übertragen durch das erste Endgerät zu dem zweiten Endgerät ist, vor der Übertragung codiert wird, wobei
eine Codierungsrate der nützlichen Information in zweite Lasersignale (S2), die durch das erste Endgerät (1) zu dem zweiten Endgerät (2) gesendet werden, variabel ist und entsprechend den zeitlichen Veränderungen der Charakteristik des Empfangs der ersten Lasersignale (S1) angepasst wird,
die Codierungsrate der nützlichen Information in die zweiten Lasersignale als ein Quotient aus einer Anzahl von Bits der nützlichen Information vor Codierung und einer Anzahl von Bits der nützlichen Information nach Codierung definiert wird,
die Codierungsrate der nützlichen Information in die zweiten Lasersignale (S2) gemäß einer fallenden Funktion einer Amplitude der zeitlichen Veränderungen der Charakteristik des Empfangs der ersten Lasersignale (S1) angepasst wird, einschließlich einer stufenweisen fallenden Funktion,
das Verfahren **dadurch gekennzeichnet ist, dass** die Charakteristik des Empfangs der ersten Lasersignale (S1) aus einer Richtung des Empfangs der ersten Lasersignale oder einer Abweichung zwischen einer Richtung des Empfangs der ersten Signale und einer optischen Achse des ersten Endgerätes (1) ausgewählt wird.

2. Verfahren nach Anspruch 1, bei dem das erste Endgerät (1) sich auf der Erde (T) befindet oder an Bord eines Luftfahrzeuges mitgeführt wird, das sich innerhalb der Erdatmosphäre (AT) befindet, und das zweite Endgerät (2) sich an Bord eines Raumfahrzeugs (S) befindet.

3. Verfahren nach Anspruch 1 oder 2, bei dem die Amplitude der zeitlichen Veränderungen der Charakteristik des Empfangs der ersten Lasersignale (S1) bewertet wird, indem eine Standardabweichung der Charakteristik des Empfangs der ersten Lasersignale berechnet wird.

4. Verfahren nach einem der vorherigen Ansprüche, bei dem die Charakteristik des Empfangs von ersten Lasersignalen (S1), die durch das erste Endgerät (1) empfangen werden, mit einer Messfrequenz von mehr als 100 Hz gemessen wird und die Amplitude der zeitlichen Veränderungen der Charakteristik des Empfangs der ersten Lasersignale mit einer Analysefrequenz von weniger als 10 Hz bewertet wird.

5. Verfahren nach einem der vorherigen Ansprüche, bei dem die Amplitude der zeitlichen Veränderungen der Charakteristik des Empfangs der ersten Lasersignale (S1) während einer Kommunikationssitzung wiederholt bewertet wird und bei dem die Codierungsrate der nützlichen Information in die zweiten Lasersignale (S2) während dieser Kommunikationssitzung in Echtzeit angepasst wird.

6. Verfahren nach einem der vorherigen Ansprüche, bei dem die Codierungsrate der nützlichen Information in die zweiten Lasersignale (S2) darüber hinaus entsprechend einem Durchschnittswert einer Empfangsleistung der ersten Lasersignale (S1) angepasst wird, so dass die Codierungsrate höher oder gleich der identischen Amplitude der zeitlichen Veränderungen der Charakteristik des Empfangs der ersten Lasersignale ist, sofern der Durchschnittswert der Empfangsleistung der ersten Lasersignale selbst höher ist.

7. Verfahren nach einem der vorherigen Ansprüche, bei dem am Anfang der Kommunikationssitzung ein niedriger Ausgangswert der Codierungsrate verwendet wird, der einer erheblichen Anfangsredundanz der nützlichen Information entspricht, und dann die Codierungsrate später während der Kommunikationssitzung gemäß der fallenden Funktion der Amplitude der zeitlichen Veränderungen der Charakteristik des Empfangs der ersten Lasersignale und entsprechend einer späteren Redundanz, die geringer ist als die Anfangsredundanz, an Werte angepasst wird, die höher sind als der Ausgangswert.

8. Verfahren nach einem der vorherigen Ansprüche, bei dem die zweiten Lasersignale (S2), die durch das erste Endgerät (1) zu dem zweiten Endgerät (2) gesendet werden, einen Kanaldurchsatz von über 10 Mbps aufweisen, was gleich einer Übertragungsrate der nützlichen Information geteilt durch die Codierungsrate ist.

9. Endgerät zur optischen Kommunikation durch Übertragung von Lasersignalen im freien Feld (1), umfassend:
- einen Empfänger (10) von ersten Lasersignalen (S1), die von einem externen Endgerät (2) stammen;
- einen Sender (15) von zweiten Lasersignalen (S2), um eine nützliche Information zu dem externen Endgerät (2) zu übertragen;
- ein Modul (11) der Analyse der zeitlichen Veränderungen einer Charakteristik des Empfangs der ersten Lasersignale (S1);
- ein Modul (13) der Codierung der nützlichen Information, das dazu ausgelegt ist, die zweiten Lasersignale (S2) mit einer variablen Codierungsrate aus den nützlichen Informationen zu erstellen; und
- ein Modul (12) der Auswahl der Codierungsrate der nützlichen Information in die zweiten Lasersignale (S2), das dazu ausgelegt ist, die Codierungsrate gemäß einer fallenden Funktion einer Amplitude der zeitlichen Veränderungen der Charakteristik des Empfangs der ersten Lasersignale (S1), einschließlich einer stufenweisen fallenden Funktion, anzupassen,
wobei die Codierungsrate der nützlichen Information in die zweiten Lasersignale als ein Quotient aus einer Anzahl von Bits der nützlichen Information vor Codierung und einer Anzahl von Bits der nützlichen Information nach Codierung definiert wird, das Endgerät (1) **dadurch gekennzeichnet ist, dass** die Charakteristik des Empfangs der ersten Lasersignale (S1) aus einer Richtung des Empfangs der ersten Lasersignale oder einer Abweichung zwischen einer Richtung des Empfangs der ersten Signale und einer optischen Achse des ersten Endgerätes (1) ausgewählt wird.

10. Endgerät nach Anspruch 9, in dem das Modul (11) der Analyse der zeitlichen Veränderungen der Charakteristik des Empfangs der ersten Lasersignale (S1) dazu ausgelegt ist, eine Standardabweichung der Charakteristik des Empfangs der ersten Lasersignale zu berechnen.

11. Endgerät nach Anspruch 9 oder 10, in dem das Modul (11) der Analyse der zeitlichen Veränderungen der Charakteristik des Empfangs der ersten Lasersignale (S1) dazu ausgelegt ist, die Charakteristik des Empfangs mit einer Messfrequenz von mehr als 100 Hz zu messen und Bewertungen der Amplitude der zeitlichen Veränderungen der Charakteristik des Empfangs mit einer Analysefrequenz von weniger als 10 Hz zu erstellen.

12. Endgerät nach einem der Ansprüche 9 bis 11, in dem das Modul (11) der Analyse der zeitlichen Veränderungen der Charakteristik des Empfangs der ersten Lasersignale (S1) dazu ausgelegt ist, die Amplitude der Veränderungen während einer Kommunikationssitzung wiederholt zu bewerten, und das Modul (12) der Auswahl der Codierungsrate der nützlichen Information in die zweiten Lasersignale (S2) dazu ausgelegt ist, die Codierungsrate während dieser Kommunikationssitzung in Echtzeit anzupassen.

13. Endgerät nach einem der Ansprüche 9 bis 12, in dem das Modul (11) der Analyse der zeitlichen Veränderungen der Charakteristik des Empfangs der ersten Lasersignale (S1) darüber hinaus dazu ausgelegt ist, Bewertungen eines Durchschnittswertes einer Empfangsleistung der ersten Lasersignale zu erstellen, und das Modul (12) der Auswahl der Codierungsrate der nützlichen Information in die zweiten Lasersignale (S2) darüber hinaus dazu ausgelegt ist, die Codierungsrate entsprechend dem Durchschnittswert der Empfangsleistung der ersten Lasersignale (S1) so anzupassen, dass die Codierungsrate höher oder gleich der identischen Amplitude der zeitlichen Veränderungen der Charakteristik des Empfangs der ersten Lasersignale ist, sofern der Durchschnittswert der Empfangsleistung der ersten Lasersignale selbst höher ist.

14. Endgerät nach einem der Ansprüche 9 bis 13, in dem das Modul (12) der Auswahl der Codierungsrate der nützlichen Information darüber hinaus dazu ausgelegt ist, am Anfang der Kommunikationssitzung einen niedrigen Ausgangswert der Codierungsrate auszuwählen, der einer erheblichen Anfangsredundanz der nützlichen Information entspricht, und die Codierungsrate später während der Kommunikationssitzung gemäß der fallenden Funktion der Amplitude der zeitlichen Veränderungen der Charakteristik des Empfangs der ersten Lasersignale und entsprechend einer späteren Redundanz, die geringer ist als die Anfangsredundanz, an Werte anzupassen, die höher sind als der Ausgangswert.

15. Endgerät nach einem der Ansprüche 9 bis 14, das dazu ausgelegt ist, die zweiten Lasersignale (S2) zu dem zweiten Endgerät (2) mit einem Kanaldurchsatz von 10 Mbps oder mehr zu senden, was gleich einer Übertragungsrate der nützlichen Information geteilt durch die Codierungsrate ist.

## Claims

1. Method for free-space optical transmission by means of laser signals, between a first (1) and a second (2) optical communications terminal, wherein time variations are evaluated for a reception characteristic of first laser signals (S1) which are received by the first terminal and which originate from the second terminal, and wherein a useful information to be sent by the first terminal to the second terminal is encoded before transmission,
an encoding rate of the useful information, in second laser signals (S2) transmitted by said first terminal (1) to said second terminal (2), being variable and being adjusted on the basis of time variations in the reception characteristic of the first laser signals (S1),
said encoding rate of the useful information in the second laser signals, being defined as a number of bits of the useful information before encoding, divided by the number of bits corresponding to the same useful information after encoding,
said encoding rate of the useful information in the second laser signals (S2) being adjusted according to a decreasing function of an amplitude of the time variations in the reception characteristic of the first laser signals (S1), said function possibly being a decreasing step function,
said method being **characterized in that** the reception characteristic of the first laser signals (S1) is selected from among a reception direction of said first laser signals or a deviation between a reception direction of said first signals and an optical axis of the first terminal (1).

2. Method according to claim 1, wherein the first terminal (1) is located on Earth (T) or on board an aircraft which is within the Earth's atmosphere (AT), and the second terminal (2) is on board a spacecraft (S).

3. Method according to claim 1 or 2, wherein the amplitude of the time variations in the reception characteristic of the first laser signals (S1) is evaluated by calculating a standard deviation of said reception characteristic of the first laser signals.

4. Method according to any of the above claims, wherein the reception characteristic of the first laser signals (S1) received by the first terminal (1) is measured at a measurement frequency greater than 100 Hz, and the amplitude of the time variations in said reception characteristic of the first laser signals is evaluated at an analysis frequency of less than 10 Hz.

5. Method according to any of the above claims, wherein the amplitude of the time variations in the reception characteristic of the first laser signals (S1) is evaluated repeatedly during a communication session, and wherein the encoding rate of the useful information in the second laser signals (S2) is adjusted in real time during said communication session.

6. Method according to any of the above claims, wherein the encoding rate of the useful information in the second laser signals (S2) is additionally adjusted as a function of a mean value of a received signal intensity of the first laser signals (S1), such that said encoding rate is the same or greater when said mean value of the received signal intensity of the first laser signals is itself greater, at the same amplitude of the time variations in the reception characteristic of the first laser signals.

7. Method according to any of the above claims, wherein a low initial value for the encoding rate is used when starting a communication session, corresponding to a significant initial redundancy in the useful information, then the encoding rate is subsequently adjusted during said communication session to values greater than the initial value, according to the decreasing function of the amplitude of the time variations in the reception characteristic of the first laser signals, and corresponding to a subsequent redundancy which is less than said initial redundancy.

8. Method according to any of the above claims, wherein the second laser signals (S2) transmitted by the first terminal (1) to the second terminal (2) have a channel transmission rate greater than 10 Mbps, equal to the transmission rate for the useful information divided by the encoding rate.

9. Optical communications terminal for free-space transmission by means of laser signals (1), comprising:
- a receiver (10) of first laser signals (S1) originating from an external terminal (2);
- a transmitter (15) of second laser signals (S2), for transmitting useful information to the external terminal (2);
- a module (11) for analyzing time variations in a reception characteristic of the first laser signals (S1);
- a module (13) for encoding the useful information, which is able to construct the second laser signals (S2) from said useful information with a variable encoding rate; and
- a module (12) for selecting the encoding rate of the useful information in the second laser signals (S2), which is able to adjust said encoding rate according to a decreasing function of the amplitude of the time variations in the reception characteristic of the first laser signals (S1), said function possibly being a decreasing step function,
the encoding rate of the useful information in the second laser signals being defined as a number of bits of the useful information before encoding, divided by the number of bits corresponding to the same useful information after encoding,
the terminal (1) being **characterized by** the reception characteristic of the first laser signals (S1) being selected from among a reception direction of said first laser signals or a deviation between the reception direction of said first signals and an optical axis of said terminal (1).

10. Terminal according to claim 9, wherein the module (11) for analyzing the time variations in the reception characteristic of the first laser signals (S1) is adapted for calculating a standard deviation of said reception characteristic of the first laser signals.

11. Terminal according to claim 9 or 10, wherein the module (11) for analyzing the time variations in the reception characteristic of the first laser signals (S1) is adapted for measuring said reception characteristic at a measurement frequency greater than 100 Hz, and for producing evaluations of the amplitude of the time variations of said reception characteristic at an analysis frequency of less than 10 Hz.

12. Terminal according to any of claims 9 to 11, wherein the module (11) for analyzing the time variations in the reception characteristic of the first laser signals (S1) is adapted for evaluating the amplitude of said variations repeatedly during a communication session, and the module (12) for selecting the encoding rate of the useful information in the second laser signals (S2) is adapted for adjusting said encoding rate in real time during said communication session.

13. Terminal according to any of claims 9 to 12, wherein the module (11) for analyzing the time variations in the reception characteristic of the first laser signals (S1) is additionally adapted for producing evaluations of a mean value of the received signal intensity of said first laser signals, and the module (12) for selecting the encoding rate of the useful information in the second laser signals (S2) is additionally adapted for adjusting said encoding rate as a function of the mean value of the received signal intensity of the first laser signals (S1), such that said encoding rate is the same or greater when said mean value of the received signal intensity of the first laser signals is itself greater, at the same amplitude of time variations in the reception characteristic of the first laser signals.

14. Terminal according to any of claims 9 to 13, wherein the module (12) for selecting the encoding rate is further adapted for selecting a low initial value for the encoding rate when starting a communication session, corresponding to a significant initial redundancy in the useful information, and for subsequently adjusting the encoding rate during said communication session to values greater than the initial value, according to the decreasing function of the amplitude of the time variations in the reception characteristic of the first laser signals, and corresponding to a subsequent redundancy which is less than said initial redundancy.

15. Terminal according to any of claims 9 to 14, adapted for transmitting the second laser signals (S2) towards the external terminal (2) at a channel transmission rate greater than or equal to 10 Mbps, equal to the transmission rate for the useful information divided by the encoding rate.
